# EUROPÄISCHE PATENTSCHRIFT

(11) **EP 0 903 270 B1**
(45) Veröffentlichungstag und Bekanntmachung des Hinweises auf die Patenterteilung: **03.04.2002**
(21) Anmeldenummer: 98117175.4
(22) Anmeldetag: 10.09.1998
(51) Int. Cl.: B60R 21/20

(54) **Dachhimmel-Verkleidung mit integrierten Kopfschutz-Gassackmodulen**
Headliner with integral head protection airbag modules
Ciel de pavillon incorporant des modules de protection de la tête par coussin gonflable

(30) Priorität: 15.09.1997 DE 29716574 U
(43) Veröffentlichungstag der Anmeldung: 24.03.1999
(73) Patentinhaber: TRW Occupant Restraint Systems GmbH & Co. KG, 73551 Alfdorf (DE)
(72) Erfinder: Eyrainer, Heinz, 73550 Waldstetten (DE); Stütz, Michael, 73565 Spraitbach (DE); Olson, Mark, 73569 Eschach (DE)
(74) Vertreter: Degwert, Hartmut, Dipl.-Phys.

(56) Entgegenhaltungen:
- DE-A- 19 632 222
- DE-U- 29 603 316
- GB-A- 2 261 636
- PATENT ABSTRACTS OF JAPAN vol. 097, no. 003, 31. März 1997 & JP 08 310335 A (NISHIKAWA RUBBER CO LTD), 26. November 1996

## Beschreibung

Die Erfindung betrifft eine Dachhimmel-Verkleidung für Fahrzeuge.

Für den Kopfschutz von Fahrzeuginsassen bei einem Seitenaufprall oder Überschlag werden aufblasbare Gassäcke verwendet, die im normalen Ruhezustand in einem schmalen Aufnahmegehäuse gefaltet verstaut sind. Das Aufnahmegehäuse mit dem darin verstauten Gassack und einem Gasgenerator zum Aufblasen des Gassacks bildet einen Modul, der vor der Montage der Dachhimmel-Verkleidung am Aufbau des Fahrzeugs im Randbereich zwischen Dach und Fahrzeugtüren angeordnet und befestigt wird. Eine solche Einrichtung nach dem Oberbegriff des Anspruchs 1 geht aus DE 29 603 316 U hervor.

Durch die Erfindung wird eine Dachhimmel-Verkleidung für Fahrzeuge geschaffen, die mit einer integrierten Kopfschutz-Rückhalteeinrichtung in Form mehrerer aufblasbarer Gassäcke eine vormontierte, montagefertige Baugruppe bildet. Die besonderen Merkmale dieser Dachhimmel-Verkleidung sind in den Schutzansprüchen angegeben.

Bevorzugte Ausführungsformen der Erfindung werden nun unter Bezugnahme auf die beigefügten Zeichnungen näher beschrieben. In der Zeichnung zeigen:
Figur 1 schematisch eine Draufsicht einer Dachhimmel-Verkleidung für Fahrzeuge;
Figur 2 einen Schnitt entlang Linie II-II in Figur 1;
Figur 3 einen Schnitt entlang Linie III-III in Figur 1; und
Figur 4 schematisch eine Draufsicht auf eine abgewandelte Ausführungsform einer Dachhimmel-Verkleidung für Fahrzeuge.

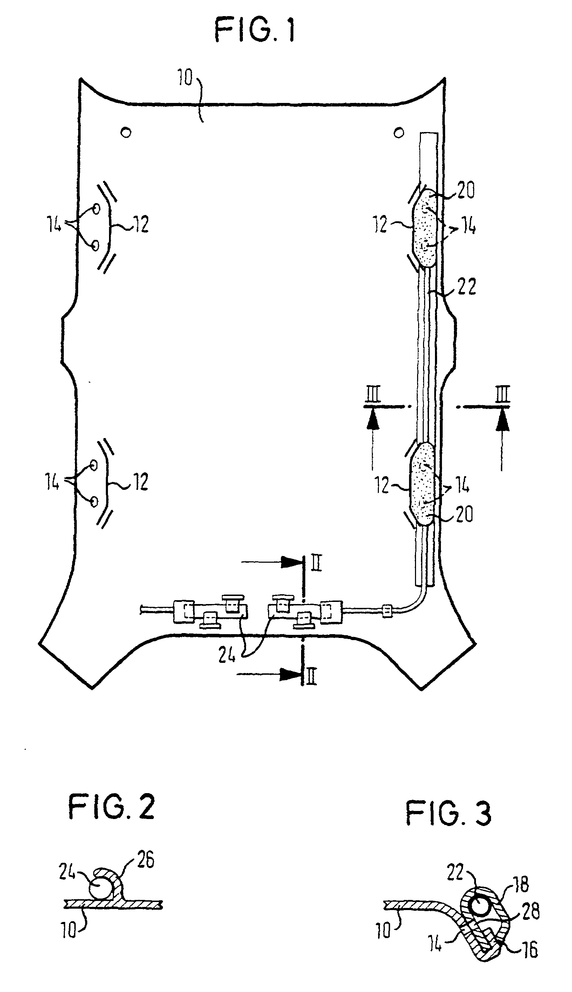

Die einteilige Dachhimmel-Verkleidung 10 ist mit vier Mulden 12 zur Aufnahme je eines Handgriffes ausgestattet. Am Boden jeder Mulde 12 befinden sich im Abstand voneinander je zwei Durchgangslöcher 14, die der Befestigung eines Handgriffs am Fahrzeugaufbau und zugleich auch der Befestigung der gesamten Dachhimmel-Verkleidung 10 am Fahrzeug dienen. Die längsseitigen Ränder der Verkleidung 10 sind mit einer angeformten hochgebogenen Lippe 16 versehen, die eine langgestreckte Nut bildet. In diese Nut greift ein Schenkel eines langgestreckten rinnenförmigen Aufnahmekörpers 18 ein. In diesem Aufnahmekörper 18 sind zwei zusammengefaltete Gassäcke 20 mit einem gemeinsamen Gasführungsrohr 22 verstaut. Jedes Gasführungsrohr 22 ist an einen zugeordneten Gasgenerator 24 angeschlossen, der mit zwei Klammern 26 unter dem hinteren Rand der Verkleidung 10 befestigt und somit ebenfalls in die Verkleidung integriert ist. Wie aus Figur 3 ersichtlich ist, weist der rinnenförmige Aufnahmekörper 18 Befestigungsüffnungen 28 auf, die mit den Durchgangslöchern 14 am Boden der Mulden 12 fluchten. Dadurch ergibt sich die Möglichkeit, sowohl die Dachhimmel-Verkleidung 10 als auch die Gassack-Module mittels der Befestigungsbolzen der Handgriffe am Fahrzeugaufbau festzulegen.

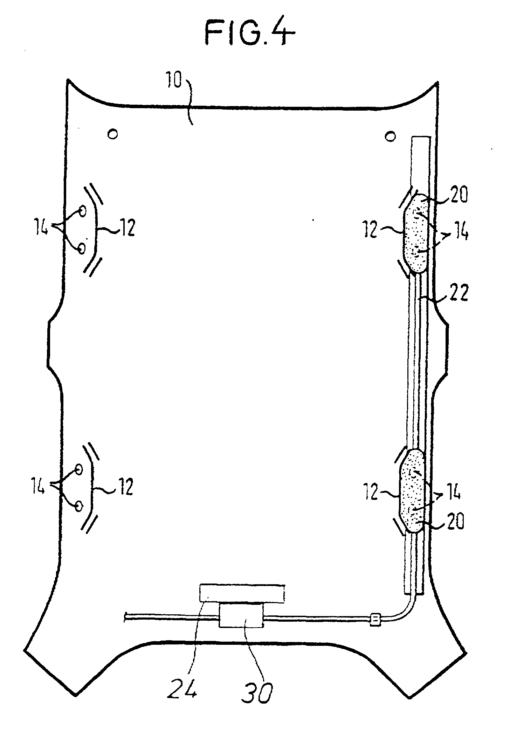

Bei einer abgewandelten Ausführungsform, die in der Figur 4 gezeigt ist, wird statt zweier getrennter Gasgeneratoren 24 nur einer verwendet, der durch eine Ventilanordnung (30) zwischen dem rechten und dem linken Modul umschaltbar ist. Abhängig davon, auf welcher Seite des Fahrzeugs ein Aufprall auftritt, wird die Ventilanordnung (30) so geschaltet, daß nur der rechte oder der linke Modul von dem Gasgenerator 24 beaufschlagt wird. Die Erfassung des Aufpralls und die Steuerung der Ventilanordnung (30) kann dabei über nicht dargestellte konventionelle Sensoren und Steuereinrichtungen erfolgen.

## Patentansprüche

1. Dachhimmel-Verkleidung für Fahrzeuge, mit integrierter Kopfschutz-Rückhalteeinrichtung in Form mehrerer aufblasbarer Gassäcke (20), die am Randbereich der Verkleidung (10) zusammengefaltet in einem rinnenförmigen Aufnahmekörper (18) verstaut sind, **dadurch gekennzeichnet, daß** die integrierte Kopfschutz-Rückhalteeinrichtung mit der Dachhimmel-Verkleidung (10) eine vormontierte Baugruppe bilden.

2. Dachhimmel-Verkleidung nach Anspruch 1, **dadurch gekennzeichnet, daß** zur Aktivierung der Gassäcke (20) vorgesehene Druckgasquellen (24) ebenfalls in die Verkleidung (10) integriert sind.

3. Dachhimmel-Verkleidung nach Anspruch 1 oder 2, **dadurch gekennzeichnet, daß** je zwei auf einer Längsseite angeordnete Gassäcke (20) in einem langgestreckten Aufnahmekörper (18) angeordnet und an eine gemeinsame Druckgasquelle (24) angeschlossen sind.

4. Dachhimmel-Verkleidung nach einem der vorstehenden Ansprüche. **dadurch gekennzeichnet, daß** jeder Gassack (20) im Bereich einer Mulde (12) zur Aufnahme eines Haltegriffs angeordnet ist.

5. Dachhimmel-Verkleidung nach Anspruch 4, **dadurch gekennzeichnet, daß** die Mulden (12) Durchgangslöcher (14) zur Befestigung der Haltegriffe aufweisen und die Aufnahmekörper (18) Befestigungsöffnungen (28) aufweisen, die mit den Durchgangslöchern (14) fluchten.

6. Dachhimmel-Verkleidung nach einem der vorstehenden Ansprüche, **dadurch gekennzeichnet, daß** die längsseitigen Ränder der Verkleidung (10) mit einer angeformten Nut versehen sind, in der ein Schenkel je eines rinnenförmigen Aufnahmekörpers (18) befestigt ist.

## Claims

1. A vehicular roof headlining, comprising an integrated head protection restraint means in the form of several inflatable gas bags (20) which are stowed folded in a trough-shaped receiving body (18) in the border region of the headlining (10), **characterized in that** the integrated head protection restraint means and the roof headlining (10) together constitute a preassembled module.

2. The roof headlining as set forth in claim 1, **characterized in that** compressed gas sources (24) provided for activating the gas bags (20) are likewise integrated in the headlining (10).

3. The roof headlining as set forth in claim 1 or 2, **characterized in that** two gas bags (20) each disposed on a long side are arranged in an elongated receiving body (18) and connected to a common compressed gas source (24).

4. The roof headlining as set forth in any of the preceding claims, **characterized in that** each gas bag (20) is arranged in the region of a depression (12) for receiving a grab handle.

5. The roof headlining as set forth in claim 4, **characterized in that** the depressions (12) comprise through-holes (14) for securing the grab handles and the receiving bodies (18) comprise fastening openings (28) in alignment with the through-holes (14).

6. The roof headlining as set forth in any of the preceding claims, **characterized in that** the edges of the headlining (10) on the long side are provided with an integrally formed groove in which one leg of each trough-shaped receiving body (18) is secured.

## Revendications

1. Revêtement de plafond de véhicules, comprenant un dispositif de retenue de protection de tête intégré sous forme de plusieurs coussins à gaz (20) gonflables qui sont logés repliés dans un corps de réception (18) en forme de goulotte, sur la région de bordure du revêtement (10), **caractérisé en ce que** le dispositif de retenue de protection de tête forme, avec le revêtement de plafond (10), un module préassemblé.

2. Revêtement de plafond selon la revendication 1, **caractérisé en ce que** des sources de gaz comprimé (24) prévues pour activer les coussins à gaz (20) sont également intégrées au revêtement (10).

3. Revêtement de plafond selon la revendication 1 ou 2, **caractérisé en ce que** deux coussins à gaz (20) agencés sur chaque côté longitudinal sont disposés dans un corps de réception (18) allongé et raccordés à une source commune de gaz comprimé (24).

4. Revêtement de plafond selon l'une quelconque des revendications précédentes, **caractérisé en ce que** chaque coussin à gaz (20) est agencé dans la région d'un creux (12) pour recevoir une poignée de retenue.

5. Revêtement de plafond selon la revendication 4, **caractérisé en ce que** les creux (12) présentent des trous de passage (14) pour fixer les poignées, et les corps de réception (18) présentent des ouvertures de fixation (28) qui sont en alignement avec les trous de passage (14).

6. Revêtement de plafond selon la revendication 4, **caractérisé en ce que** les bords longitudinaux du revêtement (10) sont pourvus d'une gorge moulée dans laquelle est fixée une branche de chacun des corps de réception (18) en forme de goulottes.
